(19) Europäisches Patentamt / European Patent Office / Office européen des brevets

(11) **EP 3 910 107 B1**

(12) **EUROPEAN PATENT SPECIFICATION**

(45) Date of publication and mention
of the grant of the patent:
**25.10.2023 Bulletin 2023/43**

(21) Application number: **20739081.6**

(22) Date of filing: **07.01.2020**

(51) International Patent Classification (IPC):
*D07B 1/06* (2006.01)   *B60C 9/04* (2006.01)
*C08L 21/00* (2006.01)   *C08K 3/04* (2006.01)
*C08K 3/36* (2006.01)

(52) Cooperative Patent Classification (CPC):
(C-Sets available)
**C08K 3/04; B60C 1/0041; B60C 9/0007;**
**C08K 3/36;** B60C 2001/0066; B60C 2009/0021;
C08K 2201/003; C08K 2201/006; Y02T 10/86

(Cont.)

(86) International application number:
**PCT/JP2020/000189**

(87) International publication number:
**WO 2020/145274 (16.07.2020 Gazette 2020/29)**

(54) **RUBBER COMPOSITION FOR COATING METAL CORD, STEEL CORD/RUBBER COMPOSITE, TIRE, AND CHEMICAL PRODUCT**

KAUTSCHUKZUSAMMENSETZUNG ZUR BESCHICHTUNG VON METALLKORD, STAHLKORD/KAUTSCHUK-VERBUNDMATERIAL, REIFEN UND CHEMISCHES PRODUKT

COMPOSITION DE CAOUTCHOUC POUR REVÊTIR UN CÂBLE MÉTALLIQUE, COMPOSITE DE CÂBLE D'ACIER/CAOUTCHOUC, PNEU ET PRODUIT CHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2019 JP 2019002614**

(43) Date of publication of application:
**17.11.2021 Bulletin 2021/46**

(73) Proprietor: **BRIDGESTONE CORPORATION**
**Chuo-ku**
**Tokyo 104-8340 (JP)**

(72) Inventor: **OSANAI, Keita**
**Tokyo 104-8340 (JP)**

(74) Representative: **Bardehle Pagenberg**
**Partnerschaft mbB**
**Patentanwälte Rechtsanwälte**
**Prinzregentenplatz 7**
**81675 München (DE)**

(56) References cited:
EP-A1- 2 915 844       EP-A1- 3 181 633
WO-A1-2018/225478     WO-A1-2019/012946
JP-A- 2011 184 553     JP-A- 2012 251 021
JP-A- 2015 124 366     JP-A- 2016 113 522
JP-A- 2017 008 223     JP-A- 2017 052 833

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/04, C08L 7/00;**
**C08K 3/36, C08L 7/00;**
**C09D 107/00, C08K 3/04, C08K 3/36, C08K 5/098,**
**C08K 5/09, C08K 5/18, C08K 3/22, C08K 5/47,**
**C08K 3/06**

**Description**

TECHNICAL FIELD

This disclosure relates to a rubber composition for coating a metal cord, a steel cord-rubber composite, a tire, and a chemical product.

BACKGROUND

A tire that requires strength generally includes, inside the tire, a carcass composed of cords embedded along the meridian direction of a ringshaped tire body, and a belt arranged on the outer side of the carcass layer in the tire radial direction. The belt or carcass may be composed of a steel cord-rubber composite in which steel cords are coated with coating rubber, which imparts load resistance, traction resistance, etc. to the tire. Additionally, the coating rubber of the steel cord is required to have high durability, especially high crack resistance.

Further, in recent years, there is an increasing demand for improving the low heat generation properties of the above-described coating rubber to reduce the rolling resistance of a tire, from the viewpoint of improving the fuel efficiency of automobiles. In response to such a demand, a technique is known where a rubber composition having reduced hysteresis loss is produced by reducing the amount of carbon black used or using low-grade carbon black, and the rubber composition is applied to a tire member.

For example, JP 2011-057967 A (PTL 1) describes a rubber composition containing 30 parts by weight to 80 parts by weight of carbon black which falls into hard carbon black region having a CTAB adsorption specific surface area of 100 $m^2$/g to 170 $m^2$/g and DBP absorption of 100 ml/100 g to 150 ml/100 g, where the aggregate diameter, shape coefficient, etc. measured with the centrifugal sedimentation method satisfy a specific relationship (see PTL 1).

However, although some improvement can be made in the low loss properties when a rubber composition having a reduced carbon black content or a rubber composition containing carbon black with an optimized particle size as described in PTL 1 is used as the above-described coating rubber, sufficient crack resistance cannot be obtained. Therefore, it has been desired to develop a technique capable of achieving both low loss properties and crack resistance.

CITATION LIST

Patent Literature

PTL 1: JP 2011-057967 A

SUMMARY

(Technical Problem)

It could thus be helpful to provide a rubber composition for coating a metal cord and a steel cord-rubber composite that can achieve both crack resistance and low heat generation properties at a high level. It could also be helpful to provide a tire that can achieve both crack resistance and low rolling resistance at a high level, and a chemical product with excellent crack resistance.

(Solution to Problem)

We thus provide the following.

The rubber composition for coating a metal cord of the present disclosure comprises a rubber component, carbon black, silica, and a vulcanizing agent, where the carbon black has an adsorption specific surface area of cetyltrimethylammonium bromide (CTAB) of 110 $m^2$/g to 160 $m^2$/g, a half width $\Delta D50$ of a peak including a Stokes equivalent diameter Dst that is the most frequent in an aggregate distribution obtained with a centrifugal sedimentation method of 60 nm or less, and a ratio of the $\Delta D50$ to the Dst ($\Delta D50/Dst$) of 0.95 or less, the silica has a CTAB adsorption specific surface area of 200 $m^2$/g or more, a content of the carbon black is larger than a content of the silica, and a content of the vulcanizing agent is 3.0 parts by mass to 7.0 parts by mass with respect to 100 parts by mass of the rubber component.

With the above configuration, both crack resistance and low heat generation properties can be achieved at a high level.

For the rubber composition for coating a metal cord of the present disclosure, compressed dibutyl phthalate (24M4DBP) absorption of the carbon black is preferably 80 $cm^3$/100 g to 110 $cm^3$/100 g. In this way, the crack resistance can be further improved without deteriorating the low heat generation properties.

For the rubber composition for coating a metal cord of the present disclosure, the content of the silica is preferably 5 parts by mass to 25 parts by mass with respect to 100 parts by mass of the rubber component. In this way, the crack resistance and the low heat generation properties can be further improved.

The steel cord-rubber composite of the present disclosure comprises the above-described rubber composition for coating a metal cord of the present disclosure and a steel cord coated with the rubber composition for coating a metal cord.

With the above configuration, both crack resistance and low heat generation properties can be achieved at a high level.

The tire of the present disclosure uses the above-described rubber composition for coating a metal cord of the present disclosure.

With the above configuration, both crack resistance and low rolling resistance can be achieved at a high level.

The chemical product of the present disclosure is a chemical product using the above-described rubber composition for coating a metal cord of the present disclosure, which is a hose, a conveyor belt, or a crawler.

With the above configuration, both crack resistance and low rolling resistance can be achieved at a high level.

(Advantageous Effect)

According to the present disclosure, it is possible to provide a rubber composition for coating a metal cord and a steel cord-rubber composite that can achieve both crack resistance and low heat generation properties at a high level. In addition, according to the present disclosure, it is also possible to provide a tire that can achieve both crack resistance and low rolling resistance at a high level, and a chemical product with excellent crack resistance.

DETAILED DESCRIPTION

The following describes the rubber composition for coating a metal cord, the steel cord-rubber composite, and the tire of the present disclosure in detail based on the embodiments thereof.

<Rubber composition for coating metal cord>

The rubber composition for coating a metal cord of the present disclosure contains a rubber component, carbon black, silica, and a vulcanizing agent.

In the rubber composition for coating a metal cord of the present disclosure, the carbon black has an adsorption specific surface area of cetyltrimethylammonium bromide (CTAB) of 110 $m^2$/g to 160 $m^2$/g, a half width $\Delta D50$ of a peak including a Stokes equivalent diameter Dst that is the most frequent in an aggregate distribution obtained with the centrifugal sedimentation method of 60 nm or less, and a ratio of the $\Delta D50$ to the Dst ($\Delta D50$/Dst) of 0.95 or less, the silica has a CTAB adsorption specific surface area of 200 $m^2$/g or more, the content of the carbon black is larger than the content of the silica, and the content of the vulcanizing agent is 3.0 parts by mass to 7.0 parts by mass with respect to 100 parts by mass of the rubber component.

Conventionally, in order to improve the low heat generation properties and the crack resistance of the rubber composition, the structure is lowered to reduce the degree of development of the aggregate structure of carbon black and the particle size of carbon black is reduced, thereby improving the crack resistance, and the aggregate distribution is broadened, thereby suppressing the deterioration of heat generation.

However, it is difficult to sufficiently improve the crack resistance even if the form of carbon black is controlled in this way. The reason is considered that broadening the aggregate distribution of carbon black increases components with a large particle size.

Therefore, the rubber composition for coating a metal cord of the present disclosure can achieve both crack resistance and low heat generation properties at a high level by adopting the above-described configurations for carbon black and silica. The reason is not clear, but it is inferred as follows.

Heat generation of vulcanized rubber generally occurs when fillers such as carbon black and silica contained in the vulcanized rubber rub with each other in the rubber. Therefore, as described above, the low heat generation properties tend to deteriorate in an environment where components with a fine particle size increases in carbon black. In the rubber composition of the present disclosure, carbon black with a large particle size having a CTAB specific surface area of 110 $m^2$/g to 160 $m^2$/g and silica with a fine particle size having a CTAB specific surface area of 200 $m^2$/g or more are used, and the content of each is adjusted. As a result, the silica with a fine particle size enters the gaps between the carbon blacks, thereby maintaining a low heat generation state without affecting the aggregation of the particles. Additionally, the rubber, the carbon black and the silica can be brought into a state of strong interaction in an area of fracture such as wear and crack of the vulcanized rubber. In this way, the crack resistance can be improved.

Therefore, in the present disclosure, there is no need to broaden the aggregate distribution of carbon black to suppress the deterioration of heat generation. It is considered that, by setting the $\Delta D50$ of the carbon black to 60 nm or less and the ratio of the $\Delta D50$ to the Dst ($\Delta D50/Dst$) to 0.95 or less and sharpening the aggregate distribution of the carbon black, the increase of components with a large particle size in the carbon black can be suppressed, and the crack resistance can be improved.

Further, in the rubber composition for coating a metal cord of the present disclosure, the content of the vulcanizing agent is 3.0 parts by mass to 7.0 parts by mass with respect to 100 parts by mass of the rubber component. Therefore, the strength such as crack resistance of the rubber composition for coating a metal cord after vulcanization can be increased without lowering the adhesiveness with the metal cord.

The following describes the constituent components of the rubber composition for coating a metal cord of the present disclosure.

(Rubber component)

The rubber component of the rubber composition for coating a metal cord of the present disclosure is not particularly limited. For example, it may contain at least one diene-based rubber selected from the group consisting of natural rubber (NR) and synthetic diene-based rubber.

Examples of the synthetic diene-based rubber include isoprene rubber (IR), butadiene rubber (BR), styrene-butadiene rubber (SBR), butadiene-isoprene rubber (BIR), styrene-isoprene rubber (SIR), and styrene-butadiene-isoprene rubber (SBIR).

From the viewpoint of improving the crack resistance without lowering the low loss properties, the diene-based rubber of the rubber component preferably contains at least one selected from the group consisting of natural rubber, polyisoprene rubber, styrene-butadiene copolymer rubber, polybutadiene rubber and isobutylene isoprene rubber, and more preferably contains at least one selected from the group consisting of natural rubber and polybutadiene rubber.

Further, from the viewpoint of improving the crack resistance without lowering the low loss properties, the rubber component preferably contains at least the natural rubber. Furthermore, in a case where the rubber component contains natural rubber, the ratio of the content of the natural rubber is preferably 70 mass% or more and more preferably 80 mass% or more in the rubber component from the viewpoint of further improving the wear resistance and the crack resistance.

Note that the rubber component may also contain non-diene-based rubber as long as the effect of the present disclosure is not impaired.

(Carbon black)

The rubber composition for coating a metal cord of the present disclosure contains carbon black in addition to the rubber component.

In the carbon black, the adsorption specific surface area of cetyltrimethylammonium bromide (CTAB) is 110 $m^2/g$ to 160 $m^2/g$, the half width $\Delta D50$ of a peak including a Stokes equivalent diameter Dst that is the most frequent in an aggregate distribution obtained with the centrifugal sedimentation method is 60 nm or less, and a ratio of the $\Delta D50$ to the Dst ($\Delta D50/Dst$) is 0.95 or less.

The carbon black can maintain the low heat generating properties and the crack resistance at a high level by setting the CTAB specific surface area in a range of 110 $m^2/g$ to 160 $m^2/g$. When the CTAB specific surface area is less than 110 $m^2/g$, sufficient crack resistance and wear resistance cannot be obtained. When the CTAB specific surface area exceeds 160 $m^2/g$, the low heat generation properties deteriorate. From the viewpoint of further improving the wear resistance and the crack resistance, the CTAB specific surface area of the carbon black is preferably 115 $m^2/g$ or more and more preferably 120 $m^2/g$ or more. On the other hand, from the viewpoint of further improving the low heat generation properties, the CTAB specific surface area of the carbon black is preferably 157 $m^2/g$ or less and more preferably 153 $m^2/g$ or less.

The CTAB specific surface area of the carbon black can be measured with a method according to JIS K 6217-3: 2001 (method of determining specific surface area-CTAB adsorption method).

Further, the wear resistance and the crack resistance can be improved by setting the half width $\Delta D50$ of a peak including a Stokes equivalent diameter Dst that is the most frequent in an aggregate distribution obtained with the centrifugal sedimentation method of the carbon black to 60 nm or less. Although the lower limit of the $\Delta D50$ is not particularly limited, it is preferably 20 nm or more from the viewpoint of manufacturability. In addition, from the viewpoint of achieving both the crack resistance and the manufacturability of the rubber composition, the $\Delta D50$ of the carbon black is preferably 20 nm to 55 nm and more preferably 25 nm to 50 nm.

In an aggregate distribution curve obtained with the centrifugal sedimentation method, the $\Delta D50$ (nm) is the width of the distribution when the frequency is half the height of the maximum point. The Dst is the size of the aggregate that has the highest frequency in the aggregate distribution obtained using the centrifugal sedimentation method according to the method described in JIS K6217-6, and the Dst may be called the Stokes sedimentation diameter. The Dst is taken as the average diameter of the carbon black aggregates. In the present disclosure, the aggregate distribution of the carbon black means an aggregate distribution based on volume.

Furthermore, the carbon black can realize excellent crack resistance and fracture resistance by setting a ratio of the $\Delta D50$ to the Dst ($\Delta D50/Dst$) to 0.95 or less. Although the lower limit of the ratio of the $\Delta D50$ to the Dst ($\Delta D50/Dst$) is not particularly limited, it is preferably 0.50 or more from the viewpoint of not deteriorating the low heat generation properties. In addition, from the viewpoint of achieving both the crack resistance and the low heat generation properties of the rubber composition at a higher level, the $\Delta D50/Dst$ is preferably 0.50 to 0.90 and more preferably 0.55 to 0.87.

Moreover, the carbon black preferably has a compressed dibutyl phthalate (24M4DBP) absorption of 80 cm$^3$/100 g to 110 cm$^3$/100 g.

When the 24M4DBP absorption of the carbon black is 80 cm$^3$/100 g or more, The force to grab the rubber is strengthened, and the wear resistance and the crack resistance can be enhanced. When the 24M4DBP absorption is 110 cm$^3$/100 g or less, the heat generation properties are low, the viscosity of unvulcanized rubber is lowered, and the processability in the factory is improved. From the same viewpoint, the 24M4DBP absorption of the carbon black is more preferably 80 cm$^3$/100 g to 105 cm$^3$/100 g and still more preferably 80 cm$^3$/100 g to 100 cm$^3$/100 g.

The 24M4DBP absorption (cm$^3$/100 g) of the carbon black is a value obtained by repeatedly applying a pressure of 24,000 psi for four times and then measuring the DBP (dibutyl phthalate) absorption in accordance with ISO 6894. The 24M4DBP absorption is an index for evaluating the skeletal structure identification of carbon black mainly composed of a primary structure, which is used when eliminating the DBP absorption due to a deformable or destructive structural form (secondary structure) caused by the so-called van der Waals force and determining the DBP absorption based on a structure form of a non-destructive true structure (primary structure).

The type of the carbon black is not particularly limited if the above-described CTAB, $\Delta D50$ and Dst are within the above ranges. Examples thereof include carbon black such as GPF, FEF, HAF, ISAF and SAF, and commercially available products may be used. The carbon black may be used in one type or in combination of two or more types.

In the rubber composition for coating a metal cord of the present disclosure, the content of the carbon black is required to be larger than the content (mass) of the silica described later. This is because silica with a fine particle size can easily enter the gaps between the carbon blacks, which can maintain a low heat generation state without affecting the aggregation of particles and at the same time can also improve the crack resistance.

In the present disclosure, the content of the carbon black and the content of the silica are the total amount of each when a plurality of types of carbon black and a plurality of types of silica are used.

Further, the ratio of the content of the carbon black to the total content of the carbon black and the silica is preferably 65 mass% to 85 mass% and more preferably 70 mass% to 85 mass%. When the ratio of the content of the carbon black is 65 mass% or more, the crack resistance can be further enhanced. When the ratio of the content of the carbon black is 85 mass% or less, deterioration of low heat generation properties can be suppressed.

Furthermore, the content of the carbon black is preferably 33 parts by mass to 55 parts by mass and more preferably 40 parts by mass to 46 parts by mass with respect to 100 parts by mass of the rubber component. When the content of the carbon black is 40 parts by mass or more with respect to 100 parts by mass of the rubber component, better crack resistance can be realized. When the content of the carbon black is 46 parts by mass or less, deterioration of low heat generation properties can be suppressed more reliably.

(Silica)

The rubber composition for coating a metal cord of the present disclosure contains silica in addition to the rubber component and the carbon black.

The silica has a CTAB adsorption specific surface area of 200 m$^2$/g or more. When the CTAB adsorption specific surface area of the silica is 200 m$^2$/g or more, the crack resistance of the rubber composition for coating a metal cord can be enhanced.

The CTAB specific surface area of the silica can be measured with a method based on the method of ASTM-D3765-80.

From the viewpoint of realizing better crack resistance, the CTAB specific surface area of the silica is preferably 210 m$^2$/g or more, more preferably 220 m$^2$/g or more, and still more preferably 230 m$^2$/g or more.

Although the upper limit of the CTAB specific surface area of the silica is not particularly limited, it is impossible to obtain silica exceeding 300 m$^2$/g at present.

Further, the specific surface area of the silica measured with the BET method (BET specific surface area) is preferably 100 m$^2$/g to 300 m$^2$/g and more preferably 150 m$^2$/g to 250 m$^2$/g. When the BET specific surface area of the silica is 100 m$^2$/g to 300 m$^2$/g, it is possible to suppress the aggregation of silicas and secure the surface area required for the reinforcing properties of the rubber, thereby achieving both the low heat generation properties and the crack resistance at a higher level.

The BET specific surface area of the silica can be measured according to the method of JIS K 6430:2008.

The type of the silica is not particularly limited if it has a CTAB specific surface area of 200 m$^2$/g or more, and examples thereof include wet silica, colloidal silica, calcium silicate, and aluminum silicate.

Among the above, the silica is preferably wet silica and more preferably precipitated silica. These silicas have high dispersibility, can improve the low heat generation properties, and can further improve the crack resistance. Precipitated silica is silica obtained as a result of aggregating primary particles by, in the early stage of production, allowing a reaction solution to react at a relatively high temperature and in neutral to alkaline pH range to grow primary silica particles, and then controlling the silica primary particles to be acidic.

The silica may be a commercially available product and can be obtained as, for example, Zeosil Premium 200MP (product name) manufactured by Rhodia.

The silica may be used alone or in combination of two or more.

The content of the silica is preferably 2 parts by mass to 25 parts by mass, more preferably 5 parts by mass to 25 parts by mass, and still more preferably 5 parts by mass to 14 parts by mass with respect to 100 parts by mass of the rubber component. When the content of the silica is 2 parts by mass or more with respect to 100 parts by mass of the rubber component, the crack resistance can be further improved. When the content of the silica is 25 parts by mass or less with respect to 100 parts by mass of the rubber component, deterioration of workability can be suppressed.

(Silane coupling agent)

Because the rubber composition for coating a metal cord of the present disclosure contains silica, a silane coupling agent may also be contained to strengthen the bond between silica-rubber components and further enhance the reinforcing properties, thereby improving the dispersibility of the silica.

When the silane coupling agent is contained, the content thereof is preferably 5 mass% to 15 mass% or less with respect to the content of the silica. When the content of the silane coupling agent is 15 mass% or less with respect to the content of the silica, the effect of improving the dispersibility of the silica can be obtained, and the economic efficiency is hardly impaired. When the content of the silane coupling agent is 5 mass% or more with respect to the content of the silica, the dispersibility of the silica in the rubber composition can be enhanced.

The silane coupling agent is not particularly limited. Suitable examples thereof include bis(3-triethoxysilylpropyl) disulfide, bis(3-triethoxysilylpropyl) trisulfide, bis(3-triethoxysilylpropyl) tetrasulfide, bis(3-trimethoxysilylpropyl) disulfide, bis(3-trimethoxysilylpropyl) trisulfide, bis(3-trimethoxysilylpropyl) tetrasulfide, bis(2-triethoxysilylethyl) disulfide, bis(2-triethoxysilylethyl) trisulfide, bis(2-triethoxysilylethyl) tetrasulfide, 3-trimethoxysilylpropyl benzothiazole disulfide, 3-trimethoxysilylpropyl benzothiazole trisulfide, and 3-trimethoxysilylpropyl benzothiazole tetrasulfide.

(Vulcanizing agent)

The rubber composition for coating a metal cord of the present disclosure contains a vulcanizing agent in addition to the above-described rubber component, carbon black and silica, and an optional component of silane coupling agent.

The content of the vulcanizing agent is 3.0 parts by mass to 7.0 parts by mass with respect to 100 parts by mass of the rubber component. When the vulcanizing agent is contained within the above range, the strength (crack resistance, etc.) of the rubber composition for coating a metal cord after vulcanization can be increased without lowering the adhesion to the metal cord.

Examples of the type of the vulcanizing agent include sulfur.

(Vulcanization accelerator)

The rubber composition for coating a metal cord of the present disclosure preferably further contains a vulcanization accelerator in addition to the above-described rubber component, carbon black, silica and vulcanizing agent, and an optional component of silane coupling agent.

By containing the vulcanization accelerator, vulcanization can be promoted, and the strength of the rubber composition for coating a metal cord after vulcanization can be further increased.

The type of the vulcanization accelerator is not particularly limited, and examples thereof include guanidine-based, aldehyde-amine-based, aldehyde-ammonia-based, thiazole-based, sulfenamide-based, thiourea-based, dithiocarbamate-based, and xanthate-based vulcanization accelerators. These vulcanization accelerators may be used alone or in combination of two or more.

Further, it is preferable to use a sulfenamide-based vulcanization accelerator among the above-mentioned vulcanization accelerators from the viewpoint of further increasing the strength of the rubber composition for coating a metal cord after vulcanization.

Examples of the sulfenamide-based vulcanization accelerator include N-cyclohexyl-2-benzothiazolyl sulfenamide, N, N-dicyclohexyl-2-benzothiazolyl sulfenamide, N-tert-butyl-2-benzothiazolyl sulfenamide, N-oxydiethylene-2-benzothiazolyl sulfenamide, N-methyl-2-benzothiazolyl sulfenamide, N-ethyl-2-benzothiazolyl sulfenamide, N-propyl-2-benzothiazolyl sulfenamide, N-butyl-2-benzothiazolyl sulfenamide, N-pentyl-2-benzothiazolyl sulfenamide, N-hexyl-2-benzothiazolyl sulfenamide, N-heptyl-2-benzothiazolyl sulfenamide, N-octyl-2-benzothiazolyl sulfenamide, N-2-ethylhexyl-2-benzothiazolyl sulfenamide, N-decyl-2-benzothiazolyl sulfenamide, N-dodecyl-2-benzothiazolyl sulfenamide, N-stearyl-2-benzothiazolyl sulfenamide, N, N-dimethyl-2-benzothiazolyl sulfenamide, N, N-diethyl-2-benzothiazolyl sulfenamide, N, N-dipropyl-2-benzothiazolyl sulfenamide, N, N-dibutyl-2-benzothiazolyl sulfenamide, N, N-dipentyl-2-benzothiazolyl sulfenamide, N, N-dihexyl-2-benzothiazolyl sulfenamide, N, N-diheptyl-2-benzothiazolyl sulfenamide, N, N-dioctyl-2-benzothiazolyl sulfenamide, N, N-di-2-ethylhexyl benzothiazolyl sulfenamide, N, N-didecyl-2-benzothiazolyl sulfenamide, N, N-didodecyl-2-benzothiazolyl sulfenamide, and N, N-distearyl-2-benzothiazolyl sulfenamide.

Among the above, the vulcanization accelerator more preferably contains at least N-cyclohexyl-2-benzothiazolyl sulfenamide.

Furthermore, from the viewpoint of further improving the low heat generation properties and the crack resistance of the rubber composition for coating a metal cord, the content of the vulcanization accelerator is preferably 0.2 parts by mass or more and more preferably 0.3 parts by mass or more, and preferably 2.0 parts by mass or less, more preferably 1.8 parts by mass or less, and still more preferably 1.6 parts by mass or less, with respect to 100 parts by mass of the rubber component.

In addition to the above-described rubber component, carbon black, silica and vulcanizing agent, and optional components of silane coupling agent and vulcanization accelerator, the rubber composition for coating a metal cord of the present disclosure may contain other components if the effect of the present disclosure is not impaired.

Examples of the other components include additives commonly used in the rubber industry, such as a softener, stearic acid, an age resistor, zinc oxide, resin, wax, and oil, which can be appropriately contained within a range that does not impair the object of the present disclosure.

Among the other components, zinc oxide (ZnO) is used as a vulcanization accelerator aid.

When the rubber composition for coating a metal cord of the present disclosure further contains zinc oxide, vulcanization can be promoted, and the strength of the rubber composition for coating a metal cord after vulcanization can be further increased.

The content of the zinc oxide is not particularly limited. However, from the viewpoint of further improving the low heat generation properties and the crack resistance of the rubber composition for coating a metal cord, the content is preferably 5 parts by mass to 13 parts by mass and more preferably 7 parts by mass to 10 parts by mass with respect to 100 parts by mass of the rubber component.

The rubber composition for coating a metal cord of the present disclosure may also contain a cobalt compound from the viewpoint of enhancing the adhesiveness with the metal cord. The type of the cobalt compound is not particularly limited and can be appropriately selected depending on the required performance. The rubber composition for coating a metal cord of the present disclosure may be a rubber composition containing no cobalt (cobalt-free rubber composition) from the viewpoint of environmental impact.

The method of producing the rubber composition for coating a metal cord of the present disclosure is not particularly limited.

For example, it can be produced by blending each of the above-described components and kneading them using a kneader such as a Banbury mixer, a roll, or an internal mixer.

The kneading of each component of the rubber composition for coating a metal cord of the present disclosure may be performed at one stage, or at multiple stages of two or more stages.

<Steel cord-rubber composite>

The steel cord-rubber composite of the present disclosure contains the above-described rubber composition for coating a metal cord of the present disclosure and a steel cord coated with the rubber composition for coating a metal cord.

By using the rubber composition for coating a metal cord of the present disclosure as coating rubber of a steel cord, the obtained steel cord-rubber composite can achieve both low heat generation properties and crack resistance.

The method of coating the steel cord with the rubber composition for coating a metal cord of the present disclosure is not particularly limited, and examples thereof include the method described below.

A predetermined number of brass-plated steel cords are arranged in parallel at predetermined intervals, these steel cords are coated from both the upper and lower sides with an unvulcanized rubber sheet that has a thickness of about 0.5 mm and is made of the rubber composition of the present disclosure, and then these steel cords are vulcanized, for example, at a temperature of about 160 °C for about 20 minutes.

The steel cord-rubber composite thus obtained achieves both low heat generation properties and crack resistance and has excellent metal-rubber adhesiveness.

The steel cord may be either steel monofilament or steel multifilament (twisted cord or a bundle of cords aligned with each other), and the shape thereof is not limited. When the steel cord is a twisted cord, the twisted structure is not particularly limited, and examples thereof include a twisted structure such as single twist, double twist, layer twist, and multi twist of double twist and layer twist. It is preferable to subject the surface of these steel cords to surface treatment such as plating treatment or adhesive treatment from the viewpoint of suitably ensuring the adhesiveness with the rubber composition.

The surface of the steel filament may be plated. The type of plating is not particularly limited, and examples thereof include zinc (Zn) plating, copper (Cu) plating, and tin (Sn plating, brass (copper-zinc (Cu-Zn)) plating, bronze (copper-tin (Cu-Sn)) plating. Among the above, it is preferable to use brass plating.

For example, steel filament having 2 atomic% or more and 60 atomic% or less of N atoms on the surface and a Cu/Zn ratio of 1 or more and 4 or less on the surface can be used. Further, examples of the steel filament include one where the amount of phosphorus contained as an oxide up to 5 nm in the outermost layer of the filament inward in the radial direction of the filament is 7.0 atomic% or less in proportion to the total amount excluding the amount of carbon (C).

Furthermore, when adhesive treatment is performed, it is preferable to perform the adhesive treatment using, for example, Chemlok® (Chemlok is a registered trademark in Japan, other countries, or both) manufactured by LORD Corporation.

The use of the steel cord-rubber composite of the present disclosure is not particularly limited. For example, it can be used for rubber articles that require special strength, such as tires, conveyor belts, hoses and rubber crawlers for various automobile, and can be used as a reinforcing material inside these articles. It is particularly suitable to use it as a reinforcing member of, for example, belts, carcass plies and wire chafers of radial tires for various automobiles.

<Tire>

The tire of the present disclosure uses the above-described rubber composition for coating a metal cord of the present disclosure.

By using the rubber composition for coating a metal cord and the steel cord-rubber composite of the present disclosure in members constituting a tire, it is possible to improve the low rolling resistance and improve the crack resistance.

The tire of the present disclosure is preferably a pneumatic tire, where the gas to be filled in the pneumatic tire may be, in addition to normal air or air with adjusted oxygen partial pressure, an inert gas such as nitrogen, argon and helium.

The method of producing the tire of the present disclosure is not particularly limited, and the tire may be produced according to a conventional method. Generally, a rubber composition containing various components is worked into each member at an unvulcanized stage, and the members are pasted and molded on a tire molding machine with a usual method to form a raw tire. The raw tire is heated and pressurized in a vulcanizer to produce a tire. For example, the tire can be obtained by kneading the rubber composition of the present disclosure, then coating the obtained rubber composition on a steel cord, laminating an unvulcanized belt, an unvulcanized carcass and other unvulcanized members thereon, and vulcanizing the unvulcanized laminate.

EXAMPLES

The following describes the present disclosure in more detail with reference to examples. However, the present disclosure is not limited to the following examples.

<Examples 1 to 9 and Comparative Examples 1 to 7>

Using the components listed in Table 1 or Table 2, a rubber composition of each sample was prepared according to the chemical composition listed in Table 1.

Next, brass-plated (Cu: 63 mass%, Zn: 37 mass%) steel cords (1 mm × 5 mm × 0.25 mm (wire diameter)) were arranged in parallel at 12.5 mm intervals and coated with the prepared rubber composition. Next, the steel cords were vulcanized at 145 °C for 30 minutes to prepare samples of steel cord-rubber composite.

Details of each component in Tables 1 and 2 are as follows. The details of carbon black are listed in Table 1. Note that the content of each component is a content (parts by mass) with respect to 100 parts by mass of the rubber component.

- Method of producing silica 1

First, 12 L of a sodium silicate solution having a concentration of 10 g/L (with a $SiO_2/Na_2O$ weight ratio of 3.5) was introduced into a 25 L-stainless steel reactor. The solution was heated to 80 °C. The entire reaction was carried out at this temperature. Sulfuric acid having a concentration of 80 g/L was introduced by stirring (300 rpm, propeller stirrer) until the pH reached a value of 8.9.

A sodium silicate solution having a concentration of 230 g/L (with a $SiO_2/Na_2O$ weight ratio of 3.5) and sulfuric acid having a concentration of 80 g/L were simultaneously introduced into the reactor for 15 minutes, where the sodium silicate solution was introduced at a rate of 76 g/min, and the sulfuric acid was introduced at a rate set to maintain the pH of the reaction mixture at a value of 8.9. In this way, a sol of barely agglomerated particles was obtained. The sol was recovered and cooled rapidly using a copper coil with circulating cold water. The reactor was cleaned quickly.

The 25-L reactor was introduced with 4 L of pure water. Sulfuric acid having a concentration of 80 g/L was introduced until the pH reached a value of 4. The cooled sol and sulfuric acid (having a concentration of 80 g/L) were added simultaneously for 40 minutes, where the cooled sol was at a flow rate of 195 g/min, and the sulfuric acid was at a flow rate that allows the pH to be 4. An aging process was performed for 10 minutes.

Forty minutes after the simultaneous addition of the sol and the sulfuric acid, sodium silicate (the same sodium silicate as the one of the first simultaneous addition) and sulfuric acid (80 g/L) were simultaneously added for 20 minutes, where the sodium silicate was at a flow rate of 76 g/min, and the sulfuric acid was at a flow rate set to maintain the pH of the reaction mixture at a value of 4. After 20 minutes, the flow of the acid was stopped until the pH was 8.

New simultaneous addition was performed for 60 minutes, where sodium silicate (the same sodium silicate as the one of the first simultaneous addition) was added at a flow rate of 76 g/min, and sulfuric acid (having a concentration of 80 g/L) was added at a flow rate set to maintain the pH of the reaction mixture at a value of 8. The stirring speed was increased when the mixture became very viscous.

After the simultaneous addition, the pH of the reaction mixture was adjusted to 4 over 5 minutes by sulfuric acid having a concentration of 80 g/L. The mixture was aged at a pH of 4 for 10 minutes. The slurry was filtered and washed under reduced pressure (15 % cake solids) and diluted, and then the obtained cake was mechanically crushed. The obtained slurry was spray-dried by a turbine spray dryer to obtain silica 1.

- Physical properties of carbon black

The physical properties of carbon black listed in Table 1 were determined with the following methods.

(i) Compressed dibutyl phthalate absorption (24M4DBP)
The 24M4DBP absorption ($cm^3/100$ g) was measured according to ISO 6894.
(ii) CTAB specific surface area
The CTAB specific surface area ($m^2/g$) was measured with a method according to JIS K 6217-3: 2001 (method of determining specific surface area-CTAB adsorption method).
(iii) Aggregate distribution (centrifugal sedimentation method)
A disk centrifuge photosedimentometer (DCP) "BI-DCP Particle sizer" (manufactured by Brookhaven) was used as a measuring device. Additionally, the measurement was performed in accordance with ISO/CD 15825-3 as follows.

First, 0.05 mass% to 0.1 mass% of carbon black was added to a 25 vol% ethanol aqueous solution to which a small amount of surfactant had been added, and the ethanol aqueous solution was subjected to ultrasonication (1/2-inch oscillating chip, output 50 W) and completely dispersed to obtain a dispersion liquid. Next, 17.5 ml of distilled water was added as a precipitate solution (spin solution) to a rotating disk, the rotation speed of the rotating disk was set to 8,000 rpm, and 0.02 ml to 0.03 ml of the dispersion liquid was added. A recorder was operated at the same time as the dispersion liquid was added, the amount of carbon black aggregates passing through a certain point near the outer periphery of the rotating disk by precipitation was optically measured, and the absorbance (frequency) was recorded as a continuous curve over time. The settling time was converted to a Stokes equivalent diameter d by the following Stokes general formula (A), and a corresponding curve between the Stokes equivalent diameter of the aggregate and its frequency was obtained.

$$d = K/\sqrt{t} \quad (A)$$

In the above formula (A), d is the Stokes equivalent diameter (nm) of the carbon black aggregate that passes through the optical measurement point of the rotating disk in a period of t minutes after the start of precipitation. The constant K is a value determined by the temperature and the viscosity of the spin liquid at the time of measurement, the density difference from carbon black (the true density of carbon black is 1.86 g/cm$^3$), and the rotation speed of the rotating disk. In Examples and Comparative Examples, 17.5 ml of distilled water was used as the spin solution, the measurement temperature was 23.5 °C, and the disk rotation speed was 8,000 rpm, so that the constant K was 261.75. The mode diameter Dst (nm), the half width ΔD50 (nm), and the ratio (ΔD50/Dst) were obtained from the measurement results. The definitions of the mode diameter Dst and the half width ΔD50 are as follows. Mode diameter Dst: the Stokes equivalent diameter that is the most frequent in the corresponding curve between the Stokes equivalent diameter of the aggregate and its frequency.

Half width ΔD50: the width of the distribution when the frequency is half the height of the maximum point in the corresponding curve between the Stokes equivalent diameter of the aggregate and its frequency.

<Evaluation>

A test piece of vulcanized rubber was cut out from each sample of the prepared steel cord-rubber composite, and the crack resistance and the low heat generation properties were evaluated under the following conditions. The evaluation results are listed in Table 1.

(1) Crack resistance

The vulcanized rubber test piece obtained from each sample was deteriorated for 24 hours in an air atmosphere of 100 °C, and then punched into a dumbbell shape to obtain a sample with 1 mm pre-crack in the center. The sample was subjected to stroke of 5 Hz under conditions of 80 °C, a distance between chucks of 20 mm and a constant stress using a fatigue tester, and the number of times until the sample was completely broken was measured.

The evaluation result was indicated as an index taking the number of times until the vulcanized rubber test piece of Comparative Example 1 broke as 100. The larger the index value is, the longer the life is, and the better the crack resistance is.

(2) Low heat generation properties

The tan δ of the vulcanized rubber test piece obtained from each sample was measured at a temperature of 60 °C, strain of 5 %, and frequency of 15 Hz using a viscoelasticity meter (manufactured by Rheometrics Inc.), and then the reciprocal was calculated.

As the evaluation result, the heat generation index of the test piece of each sample was indicated by the following expression, taking the reciprocal of the tan δ of Comparative Example 1 as 100. The larger the index value is, the smaller the hysteresis loss is, and the better the low heat generation properties are.

$$\text{Heat generation index} = \{(\text{reciprocal of tan δ of test piece of each sample})/(\text{reciprocal of tan δ of test piece of Comparative Example 1})\} \times 100$$

Table 1

| | | | Comparative Example | | | | | | | Example | | | | | | | | |
|---|---|---|---|---|---|---|---|---|---|---|---|---|---|---|---|---|---|---|
| | | | 1 | 2 | 3 | 4 | 5 | 6 | 7 | 1 | 2 | 3 | 4 | 5 | 6 | 7 | 8 | 9 |
| Natural rubber *1 | | Part by mass | 100 | 100 | 100 | 100 | 100 | 100 | 100 | 100 | 100 | 100 | 100 | 100 | 100 | 100 | 100 | 100 |
| Carbon black | Amount (b) | Part by mass | 40 | 54 | 40 | 40 | 40 | 40 | 40 | 33 | 40 | 40 | 40 | 40 | 40 | 46 | 40 | 40 |
| | CTAB | $m^2/g$ | 87 | 147 | 147 | 117 | 170 | 147 | 147 | 147 | 110 | 130 | 147 | 141 | 147 | 147 | 147 | 147 |
| | 24M4DBP | $cm^3/100g$ | 72 | 91 | 91 | 105 | 101 | 91 | 91 | 91 | 91 | 85 | 91 | 99 | 91 | 91 | 91 | 91 |
| | Dst | nm | 88 | 53 | 53 | 82 | 58 | 53 | 53 | 53 | 54 | 48 | 53 | 58 | 53 | 53 | 53 | 53 |
| | △D50 | nm | 64 | 43 | 43 | 78 | 55 | 43 | 43 | 43 | 46 | 30 | 43 | 52 | 43 | 43 | 43 | 43 |
| | △D50/Dst | - | 0.73 | 0.81 | 0.81 | 0.95 | 0.95 | 0.81 | 0.81 | 0.81 | 0.85 | 0.63 | 0.81 | 0.90 | 0.81 | 0.81 | 0.81 | 0.81 |
| Silica 1 *2 (CTAB230$m^2$/g) | Amount (c1) | Part by mass | 20 | - | - | 14 | 14 | 14 | 14 | 21 | 14 | 14 | 14 | 14 | 14 | 8 | 14 | 14 |
| Silica 2 *3 (CTAB150$m^2$/g) | Amount (c2) | Part by mass | - | - | 14 | - | - | - | - | - | - | - | - | - | - | - | - | - |
| Total of (b)+(c1)+(c2) | Amount (d) | Part by mass | 60 | 54 | 54 | 54 | 54 | 54 | 54 | 54 | 54 | 54 | 54 | 54 | 54 | 54 | 54 | 54 |
| [(b)/(d)] × 100 | | % | 67 | 100 | 74 | 74 | 74 | 74 | 74 | 61 | 74 | 74 | 74 | 74 | 74 | 85 | 74 | 74 |
| Cobalt salt of fatty acid *4 | | Part by mass | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| Stearic acid *5 | | Part by mass | - | - | - | - | - | - | - | - | - | - | - | - | - | - | - | - |
| Age resistor 6C *6 | | Part by mass | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Zinc oxide *7 | | Part by mass | 8.0 | 8.0 | 8.0 | 8.0 | 8.0 | 8.0 | 8.0 | 8.0 | 8.0 | 8.0 | 8.0 | 8.0 | 8.0 | 8.0 | 8.0 | 8.0 |
| Vulcanization accelerator CBS *8 | | Part by mass | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |

(continued)

| | | Comparative Example | | | | | | | Example | | | | | | | | |
|---|---|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 | 8 | 9 |
| Vulcanizing agent *9 | Part by mass | 5.0 | 5.0 | 5.0 | 5.0 | 5.0 | 1.5 | 9.0 | 5.0 | 5.0 | 5.0 | 5.0 | 5.0 | 5.0 | 5.0 | 3.0 | 7.0 |
| Evaluation | Crack resistance (the larger the better) | 100 | 100 | 93 | 95 | 115 | 150 | 98 | 125 | 110 | 120 | 125 | 132 | 130 | 145 | 145 | 112 |
| | Low heat generation property (the larger the better) | 100 | 92 | 103 | 105 | 95 | 95 | 110 | 111 | 108 | 105 | 103 | 100 | 105 | 100 | 101 | 107 |

*1 Natural rubber: RSS #1
*2 Silica 1: silica 1 is silica having a CTAB specific surface area of 230 m$^2$/g and a BET surface area of 236 m$^2$/g produced with the following production method
*3 Silica 2: product name "Nipsil AQ" manufactured by Nippon Silica Industrial Co., Ltd. (CTAB specific surface area = 150 m$^2$/g, BET surface area = 220 m$^2$/g)
*4 Cobalt salt of fatty acid: product name "MANOBOND C 22.5" manufactured by OMG
*5 Stearic acid: product name "Stearic acid 50S" manufactured by New Japan Chemical Co., Ltd.
*6 Age resistor 6C: N-phenyl-N'-(1,3-dimethylbutyl)-p-phenylenediamine, product name "NOCRAC 6C" manufactured by Ouchi Shinko Chemical Industrial Co., Ltd.
*7 Zinc oxide: product name "No. 3 Zinc oxide" manufactured by Hakusui Tech Co., Ltd.
*8 Vulcanization accelerator CBS: N-cyclohexyl-2-benzothiazolyl sulfenamide, product name "NOCCELER CZ-G" manufactured by Ouchi Shinko Chemical Industrial Co., Ltd.
*9 Vulcanizing agent: sulfur, product name "powdered sulfur" manufactured by Tsurumi Chemical Industry Co., Ltd.

From the results in Table 1, it was understood that the sample of each Example had excellent crack resistance and low heat generation properties in a well-balanced manner as compared with the sample of each Comparative Example.

INDUSTRIAL APPLICABILITY

According to the present disclosure, it is possible to provide a rubber composition for coating a metal cord and a steel cord-rubber composite that can achieve both crack resistance and low heat generation properties at a high level. In addition, according to the present disclosure, it is possible to provide a tire that can achieve both crack resistance and low rolling resistance at a high level, and a chemical product with excellent crack resistance.

**Claims**

1. A rubber composition for coating a metal cord, comprising

   a rubber component,
   carbon black having an adsorption specific surface area of cetyltrimethylammonium bromide (CTAB) of 110 $m^2/g$ to 160 $m^2/g$, a half width $\Delta D50$ of a peak including a Stokes equivalent diameter Dst that is the most frequent in an aggregate distribution obtained with a centrifugal sedimentation method of 60 nm or less, and a ratio of the $\Delta D50$ to the Dst, which is expressed as $\Delta D50/Dst$, of 0.95 or less,
   silica having a CTAB adsorption specific surface area of 200 $m^2/g$ or more, and
   a vulcanizing agent, wherein
   a content of the carbon black is larger than a content of the silica, and a content of the vulcanizing agent is 3.0 parts by mass to 7.0 parts by mass with respect to 100 parts by mass of the rubber component.

2. The rubber composition for coating a metal cord according to claim 1, wherein the carbon black has compressed dibutyl phthalate (24M4DBP) absorption of 80 $cm^3/100$ g to 110 $cm^3/100$ g.

3. The rubber composition according to claim 1 or 2, wherein the content of the silica is 5 parts by mass to 25 parts by mass with respect to 100 parts by mass of the rubber component.

4. A steel cord-rubber composite comprising the rubber composition for coating a metal cord according to any one of claims 1 to 3 and a steel cord coated with the rubber composition for coating a metal cord.

5. A tire using the rubber composition for coating a metal cord according to any one of claims 1 to 3.

6. A chemical product using the rubber composition for coating a metal cord according to any one of claims 1 to 3, which is a hose, a conveyor belt, or a crawler.

**Patentansprüche**

1. Kautschukzusammensetzung zum Beschichten eines Metallkords, umfassend

   eine Kautschukkomponente,
   Ruß mit einer spezifischen Adsorptionsoberfläche von Cetyltrimethylammoniumbromid (CTAB) von 110 $m^2/g$ bis 160 $m^2/g$, einer Halbbreite $\Delta D50$ einer Spitze, die einen Stokes-Äquivalentdurchmesser Dst einschließt, der in einer aggregierten Verteilung am häufigsten ist, die mit einem Zentrifugalsedimentationsverfahren von 60 nm oder weniger erhalten wird, und einem Verhältnis von $\Delta D50$ zu Dst, das als $\Delta D50/Dst$ ausgedrückt ist, von 0,95 oder weniger,
   Siliziumdioxid mit einer spezifischen CTAB-Adsorptionsoberfläche von 200 $m^2/g$ oder mehr, und
   ein Vulkanisierungsmittel, wobei
   ein Gehalt an Ruß größer ist als ein Gehalt an Siliziumdioxid, und ein Gehalt an Vulkanisierungsmittel 3,0 Massenteile bis 7,0 Massenteile in Bezug auf 100 Massenteile der Kautschukkomponente beträgt.

2. Kautschukzusammensetzung zum Beschichten eines Metallkords nach Anspruch 1, wobei der Ruß eine Absorption von komprimiertem Dibutylphthalat (24M4DBP) von 80 $cm^3/100$ g bis 110 $cm^3/100$ g aufweist.

**3.** Kautschukzusammensetzung nach Anspruch 1 oder 2, wobei der Gehalt an Siliziumdioxid 5 bis 25 Massenteile in Bezug auf 100 Massenteile der Kautschukkomponente beträgt.

**4.** Stahlkord-Kautschuk-Verbundmaterial, umfassend die Kautschukzusammensetzung zum Beschichten eines Metallkords nach einem der Ansprüche 1 bis 3 und einen Stahlkord, der mit der Kautschukzusammensetzung zum Beschichten eines Metallkords beschichtet ist.

**5.** Reifen, der die Kautschukzusammensetzung zum Beschichten eines Metallkords nach einem der Ansprüche 1 bis 3 verwendet.

**6.** Chemisches Produkt, das die Kautschukzusammensetzung zum Beschichten eines Metallkords nach einem der Ansprüche 1 bis 3, der ein Schlauch, ein Förderband oder eine Raupe ist, verwendet.

**Revendications**

**1.** Composition de caoutchouc destinée à revêtir un câble métallique, comprenant

un composant de caoutchouc,
du noir de carbone ayant une surface spécifique d'adsorption de bromure de cétyltriméthylammonium (CTAB) de 110 m$^2$/g à 160 m$^2$/g, une demi-largeur ∆D50 d'un pic comportant un diamètre équivalent de Stokes Dst qui est le plus fréquent dans une distribution d'agrégats obtenue avec un procédé de sédimentation centrifuge de 60 nm ou moins, et un rapport de la ∆D50 au Dst, qui est exprimé en tant que ∆D50/Dst, de 0,95 ou moins,
de la silice ayant une surface spécifique d'adsorption de CTAB de 200 m$^2$/g ou plus, et
un agent de vulcanisation, dans laquelle
une teneur du noir de carbone est plus grande qu'une teneur de la silice, et une teneur de l'agent de vulcanisation va de 3,0 parties en masse à 7,0 parties en masse par rapport à 100 parties en masse du composant de caoutchouc.

**2.** Composition de caoutchouc destinée à revêtir un câble métallique selon la revendication 1, dans laquelle le noir de carbone a une absorption de phtalate de dibutyle (24M4DBP) sous compression de 80 cm$^3$/100 g à 110 cm$^3$/100 g.

**3.** Composition de caoutchouc selon la revendication 1 ou 2, dans laquelle la teneur de la silice va de 5 parties en masse à 25 parties en masse par rapport à 100 parties en masse du composant de caoutchouc.

**4.** Composite câble en acier-caoutchouc comprenant la composition de caoutchouc destinée à revêtir un câble métallique selon l'une quelconque des revendications 1 3 et un câble en acier revêtu de la composition de caoutchouc destinée à revêtir un câble métallique.

**5.** Pneu utilisant la composition de caoutchouc destinée à revêtir un câble métallique selon l'une quelconque des revendications 1 à 3.

**6.** Produit chimique utilisant la composition de caoutchouc destinée à revêtir un câble métallique selon l'une quelconque des revendications 1 à 3, qui est un tuyau flexible, une bande transporteuse, ou une chenille.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011057967 A